# EUROPÄISCHE PATENTSCHRIFT

(11) **EP 3 885 590 B1**
(45) Veröffentlichungstag und Bekanntmachung des Hinweises auf die Patenterteilung: **15.03.2023**
(21) Anmeldenummer: 20165955.4
(22) Anmeldetag: 26.03.2020
(51) Int. Cl.: F16B 43/00

(54) **KORROSIONSBESTÄNDIGE SCHRAUBENSICHERUNGSSCHEIBE**
CORROSION RESISTANT SCREW SECURING DISC
RONDELLE D'ARRÊT POUR VIS RÉSISTANTE À LA CORROSION

(43) Veröffentlichungstag der Anmeldung: 29.09.2021
(73) Patentinhaber: Teckentrup GmbH & Co. KG, 58849 Herscheid (DE)
(72) Erfinder: VOLBORTH, Thomas, 58553 Halver (DE)
(74) Vertreter: Patentanwälte Dörner & Kötter PartG mbB

(56) Entgegenhaltungen:
- EP-A1- 0 470 433
- EP-A1- 3 253 977
- EP-A1- 3 296 578
- EP-B1- 0 470 433
- EP-B1- 3 253 977
- DE-U1-202009 011 269
- GB-A- 2 068 494
- JP-A- 2009 144 883
- US-A- 4 103 725

## Beschreibung

Die Erfindung betrifft eine korrosionsbeständige Schraubensicherungsscheibe mit einem ringförmigen Edelstahl-Scheibenkörper zur Anordnung zwischen einem Schraubenkopf und einer ebenen Unterlage.

Schraubensicherungsscheiben haben die Aufgabe, Lockerungsvorgängen bei Schraubenverbindungen entgegenzuwirken. Solche Lockerungsvorgänge ergeben sich aus Vorspannkraftverlusten in den Schraubenverbindungen, welche als Folge von Setz- und/oder Kriechvorgängen bei den miteinander verschraubten Teilen auftreten.

Um derartigen Lockerungsvorgängen entgegenzutreten, weisen Schraubensicherungsscheiben eine federnde Wirkung auf, deren Federkraft derart zu bemessen ist, dass sie einen durch die Setz- und/oder Kriechvorgänge hervorgerufenen Vorspannkraftverlust soweit ausgleichen können, dass die für die Betriebssicherheit der Schraubverbindung erforderliche Klemmkraft erhalten bleibt. In der JP2009 144883 A ist eine Unterlegscheibe beschrieben, bei der ein Mitdrehen mit einer Schraube oder einer Mutter verhindert ist.

Bei hohen Anforderungen an den Korrosionsschutz, insbesondere auch im Lebensmittelbereich, kommen Schraubenverbindungen aus Edelstahl zum Einsatz. Die Schraubensicherungselemente sind bei Verbindungen mit Edelstahlschrauben ebenfalls aus Edelstahl hergestellt. Neben den guten Korrosionsschutzeigenschaften von Edelstahl wird durch das gleiche galvanische Potenzial der Schraubensicherungselemente Kontaktkorrosion vermieden.

Edelstahl hat grundsätzlich nur sehr geringe Federwirkungen. Bei speziellen Edelstahllegierungen kann eine erhöhte Federwirkung durch ein Wärmebehandlungsverfahren realisiert werden. Diese speziellen Edelstahllegierungen sowie auch das Wärmebehandlungsverfahren sind zum einen sehr teuer, zum anderen werden durch das Wärmebehandlungsverfahren die Korrosionseigenschaften negativ beeinflusst. Nicht zuletzt sind die im Ergebnis erzielbaren Federeigenschaften regelmäßig nicht ausreichend, um die gestellten Anforderungen zu erfüllen. Vor diesem Hintergrund werden wärmebehandelte Edelstahlwerkstoffe für Schraubensicherungselemente in der Praxis nur selten eingesetzt.

Edelstahl mit der Werkstoffnummer 1.4301 oder 1.4401 gemäß DIN EN 10027-2:2015-07 (X5CrNi18-10 bzw. X5CrNiMo17-12-2) wird häufig als federnder Edelstahl mit guten bzw. sehr guten Korrosionseigenschaften verwendet. Bei diesem Edelstahl wird durch Kaltverfestigung beim Walzen des Bandes eine Verfestigung der Oberfläche bewirkt. Diese Verfestigung führt zu einer begrenzten Federwirkung bei dünnen Blechstärken bis 1 mm, wobei die Federwirkung mit abnehmender Blechstärke zunimmt. Auffällig an diesem Werkstoff ist, dass dieser kalt verfestigt bei größeren Dicken nur eine sehr eingeschränkte Federwirkung aufweist, die zum Sitzausgleich bei Schraubenverbindungen nicht ausreichend ist. Nach der Kaltverfestigung ist dieser Werkstoff nur noch in begrenztem Umfang weiterverarbeitbar bzw. umformbar.

Hier setzt die vorliegende Erfindung an. Der Erfindung liegt die Aufgabe zugrunde, eine korrosionsbeständige Schraubensicherungsscheibe mit einem Edelstahl-Scheibenkörper bereitzustellen, die auch bei hohen Anforderungen an den Korrosionsschutz, beispielsweise im Lebensmittelbereich einsetzbar ist, eine hohe Federwirkung aufweist und kostengünstig herstellbar ist. Gemäß der Erfindung wird diese Aufgabe durch eine Schraubensicherungsscheibe mit den Merkmalen des kennzeichnenden Teils des Patentanspruchs 1 gelöst.

Mit der Erfindung ist eine korrosionsbeständige Schraubensicherungsscheibe mit einem Edelstahl-Scheibenkörper bereitgestellt, die auch bei hohen Anforderungen an den Korrosionsschutz, beispielsweise im Lebensmittelbereich einsetzbar ist, eine hohe Federwirkung aufweist und kostengünstig herstellbar ist. Dadurch, dass die Oberflächen der Scheibenoberseite und der Scheibenunterseite des Scheibenkörpers durch einen Prägeprozess verdichtet sind, wobei der Scheibenkörper eine Materialdicke von wenigstens 1,5 mm aufweist und wobei der Scheibenkörper konvex ausgebildet ist, ist eine hohe federnde Wirkung zur Kompensierung von Setzwirkungen zum Erhalt der Vorspannkraft einer Schraubenverbindung erzielt. Die Materialdicke, die ausreichend groß zu dimensionieren ist, führt in Kombination mit der Verfestigung der Randschicht im umgeformten Zustand und der bei der Verspannung entstehenden Oberflächenspannung zu der gewünschten Federwirkung. Dabei wurde überraschend gefunden, dass die Federwirkung mit zunehmender Materialdicke zunimmt. Vorzugsweise ist die Schraubensicherungsscheibe einteilig ausgebildet. Bevorzugt weist der Scheibenkörper eine Materialdicke von wenigstens 2 mm, besonders bevorzugt von wenigstens 2,5 mm, insbesondere von wenigstens 3,0 mm auf.

Beide Oberflächen der Ober- und Unterseite des Scheibenkörpers der Schraubensicherungsscheibe sind mit einer Kordierung versehen. Hierbei werden in die Oberfläche Linienkonturen eingeprägt, wodurch eine punktuelle Zusatzverdichtung der Oberfläche erzielt ist. Hierdurch ist die Oberflächenspannung der Schraubensicherungsscheibe und damit die sich einstellende Federwirkung einstellbar. Dabei sind die beiden Oberflächen mit einer zueinander unterschiedlichen Kordierung in Bezug auf Kordierungstiefe und/oder Koordinierungsmuster versehen, wodurch die Federwirkung maximiert ist.

In Ausgestaltung der Erfindung ist der Edelstahlscheibenkörper aus Edelstahl der Werkstoffnummer 1.4401 oder 1.4301 gemäß DIN EN 10027-2:2015-7 hergestellt. Hierbei handelt es sich um kostengünstige Werkstoffe, die hervorragende Korrosionseigenschaften aufweisen. Durch die Verwendung eines solchen handelsüblichen und umformbaren Ausgangswerkstoffs ist das Einprägen der Kordierung einfach möglich und es wird eine gute Verfestigung der Oberflächen der Schraubensicherungsscheibe erzielt. Die Verfestigung des weichen Ausgangsmaterials wird im Prozess kombiniert mit der Formgebung durch eine Verdichtung der Oberfläche und einer punktuellen Zusatzverdichtung in Form einer Kordierung auf einer oder beider Seiten der Schraubensicherungsscheibe durch einen Prägeprozess.

In weiterer Ausgestaltung der Erfindung sind an der der Unterlage zugewandten Unterseite der Schraubensicherungsscheibe eine äußere und eine innere Ringabschnittsfläche winkelig zueinander angeordnet, wobei die Außenkante der äußeren Ringabschnittsfläche im unverspannten Zustand der Scheibe auf der Unterlage aufliegt und wobei beide Ringabschnittsflächen mit der Unterlage jeweils einen spitzen Winkel einschließen und wobei der zwischen der äußeren Ringabschnittsfläche mit der Unterlage gebildete Winkel α größer ist, als der zwischen der inneren Ringabschnittsfläche und der Unterlage gebildete Winkel β. Hierdurch wirkt die Anstellkraft in einem steileren Winkel zur ebenen Unterlage, d. h. die Kraftkomponente in senkrechter Richtung ist höher, als die Kraftkomponente in horizontaler Richtung. Dadurch wird die Außenkante der Fläche des äußeren Ringabschnitts beim Anziehen der Schraube stärker in die ebene Unterlage gepresst, wodurch eine verbesserte Sicherungswirkung erzielt ist. Darüber hinaus kann der Außendurchmesser der Scheibe bei hoher Sicherungswirkung relativ klein gehalten werden.

In Weiterbildung der Erfindung beträgt der spitze Winkel zwischen der äußeren Ringabschnittsfläche und der Unterlage im unverspannten Zustand zwischen 10° und 20°, vorzugsweise zwischen 12° und 15°. Diese Werte liefern gute Feder- und Sicherungseigenschaften der Scheibe. Bevorzugt beträgt der spitze Winkel zwischen der inneren Ringabschnittsfläche und der Unterlage im unverspannten Zustand zwischen 3° und 15°, vorzugsweise zwischen 5° und 10°.

Vorteilhaft ist der der ebenen Unterlage zugwandte Winkel γ zwischen den beiden Ringabschnittsflächen ein stumpfer Winkel. Bevorzugt ist der spitze Winkel β zwischen der inneren Ringabschnittsfläche und der ebenen Unterlage im unverspannten Zustand etwa halb so groß, wie der spitze Winkel α zwischen der äußeren Ringabschnittsfläche und der ebenen Unterlage.

In weiterer Ausgestaltung der Erfindung ist die Oberfläche wenigstens einer Anlagefläche, bevorzugt beider Anlageflächen poliert ausgeführt. Hierdurch ist die ohnehin sehr gute Korrosionsbeständigkeit des Edelstahlwerkstoffs der Schraubensicherungsscheibe zusätzlich erhöht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Edelstahl-Schraubensicherungsscheibe;
- Figur 2: die schematische hälftige Schnittdarstellung der Schraubensicherungsscheibe aus Figur 1 und
- Figur 3: die schematische Darstellung einer Edelstahlverschraubung mit einer Sicherungsscheibe nach Figur 1 wobei die linke Seite der Figur die Sicherungsscheibe im unverspannten Zustand und die rechte Seite der Figur die Sicherungsscheibe in verspanntem Zustand zeigt.

Die als Ausführungsbeispiel gewählte Schraubensicherungsscheibe ist aus V4A Edelstahl der Werkstoffnummer 1.4401 (X5CrNiMo17-12-2) hergestellt und umfasst einen ringförmig ausgebildeten, konvexen Scheibenkörper, mit einer Materialdicke von 2,5 mm. Die Schraubensicherungsscheibe hat eine Scheibenoberseite 6 und eine Scheibenunterseite 1, deren Oberflächen jeweils durch einen Prägeprozess verdichtet sind.

Die Scheibenunterseite 1 ist konvex ausgebildet und in zwei Ringabschnittsflächen 2, 3 unterteilt, einer äußeren Ringabschnittsfläche 2 und einer inneren Ringabschnittsfläche 3, die winklig zueinander angestellt sind.

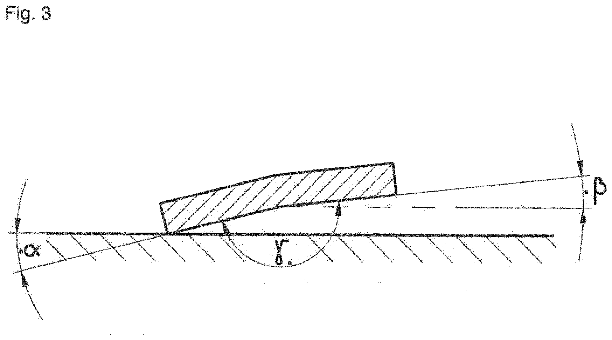

Die Sicherungsscheibe ist derart gestaltet, dass sie im unverspannten Zustand mit der Außenkante 4 ihrer äußeren Ringabschnittsfläche 2 auf einer ebenen Unterlage 5 aufliegt. Dabei schließt die äußere Ringabschnittsfläche 2 mit einer ebenen Unterlage 5 im unverspannten Zustand einen Winkel α und die innere Ringabschnittsfläche 3 mit der ebenen Unterlage 5 einen Winkel β ein (vgl. Fig. 3). Die Winkel α, β sind dabei als spitze Winkel ausgeführt, wobei der Winkel β stets einen kleineren Wert aufweist, als der Winkel α. Im Ausführungsbeispiel beträgt der Winkel α 14° und der Winkel β 6°.

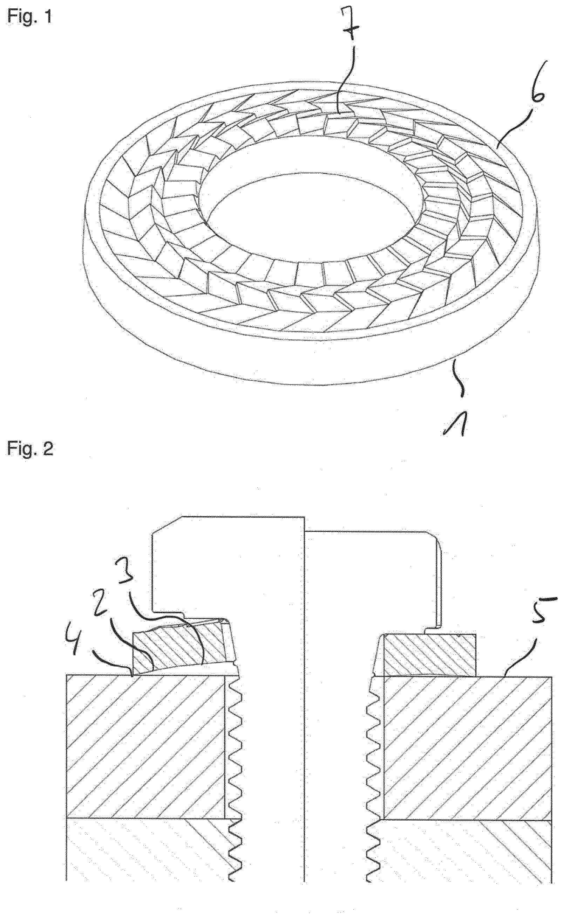

Auf ihrer der Unterlage 5 abgewandten Oberseite 6 ist die Schraubensicherungsscheibe gewölbt ausgebildet. In die Oberfläche der Oberseite 6 ist im Rahmen des Prägeprozesses umlaufend eine Kordierung 7 eingebracht, wodurch eine zusätzliche Verfestigung erzielt ist. Die Kordierung 7 ist im Ausführungsbeispiel durch eine Anordnung von Linienzügen ausgeführt (vgl. Fig. 1). Je nach gewünschter partieller Verfestigung der Oberfläche können auch andere Kordierungsmuster eingebracht sein. Im Ausführungsbeispiel ist sowohl die Oberseite 6, als auch die Unterseite 1 mit einer Kodierung 7 versehen. Zur Erhöhung der Korrosionsbeständigkeit sind die Oberflächen der Oberseite 6 und der Unterseite 1 poliert.

## Patentansprüche

1. Korrosionsbeständige Schraubensicherungsscheibe mit einem ringförmigen Edelstahl-Scheibenkörper zur Anordnung zwischen einem Schraubenkopf und einer ebenen Unterlage (5), mit einer Scheibenoberseite (6) und einer der Unterlage zugewandten Scheibenunterseite (1) wobei der Scheibenkörper konvex ausgebildet ist, **dadurch gekennzeichnet, dass** die Oberflächen der Scheibenoberseite (6) und der Scheibenunterseite (1) des Scheibenkörpers durch einen Prägeprozess verdichtet sind, wobei der Scheibenkörper eine Materialdicke von wenigstens 1,5 mm aufweist, wobei beide Oberflächen von Ober- und Unterseite (6, 1) des Scheibenkörpers mit einer zueinander unterschiedlichen Kordierung (7) in Bezug auf Kordierungstiefe und/oder Kordierungsmuster versehen sind.

2. Schraubensicherungsscheibe nach Anspruch 1, **dadurch gekennzeichnet, dass** der Scheibenkörper eine Materialdicke von wenigstens 2,0 mm, bevorzugt wenigstens 2,5 mm aufweist.

3. Schraubensicherungsscheibe nach einem der vorgenannten Ansprüche, **dadurch gekennzeichnet, dass** der Edelstahl-Scheibenkörper aus Edelstahl der Werkstoffnummer 1.4401 oder 1.4301 gemäß DIN EN 10027-2:2015-7 hergestellt ist.

4. Schraubensicherungsscheibe nach einem der vorgenannten Ansprüche, **dadurch gekennzeichnet, dass** an dessen der Unterlage (5) zugewandten Unterseite (6) eine äußere und eine innere Ringabschnittsfläche (2, 3) winklig zueinander angeordnet sind, wobei die Außenkante der äußeren Ringabschnittsfläche (2) in unverspanntem Zustand der Scheibe auf der Unterlage (5) aufliegt und wobei beide Ringabschnittsflächen (2, 3) mit der Unterlage (5) jeweils einen spitzen Winkel einschließen, wobei der zwischen der äußeren Ringabschnittsfläche (2) mit der Unterlage (5) gebildete Winkel α bevorzugt größer ist, als der zwischen der inneren Ringabschnittsfläche (3) und der Unterlage (5) gebildete Winkel β.

5. Schraubensicherungsscheibe nach einem der vorgenannten Ansprüche, **dadurch gekennzeichnet, dass** wenigstens eine der beiden Oberflächen von Ober- und Unterseite (6, 1) des Scheibenkörpers poliert ist.

6. Schraubensicherungsscheibe nach Anspruch 4 oder 5, **dadurch gekennzeichnet, dass** der spitze Winkel α zwischen der äußeren Ringabschnittsfläche (2) und der Unterlage (5) im unverspannten Zustand zwischen 10° und 20°, vorzugsweise zwischen 12° und 15° beträgt, wobei der spitze Winkel β zwischen der inneren Ringabschnittsfläche (3) und der Unterlage (5) im unverspannten Zustand zwischen 3° und 15°, vorzugsweise zwischen 5° und 10° beträgt.

7. Schraubensicherungsscheibe nach einem der Ansprüche 4 bis 6, **dadurch gekennzeichnet, dass** der der ebenen Unterlage (5) zugewandte Winkel γ zwischen den beiden Ringabschnittsflächen (2, 3) ein stumpfer Winkel ist.

8. Schraubensicherungsscheibe nach einem der Ansprüche 4 bis 7, **dadurch gekennzeichnet, dass** der spitze Winkel β zwischen der inneren Ringabschnittsfläche (3) und der ebenen Unterlage (5) im unverspannten Zustand etwa halb so groß ist, wie der spitze Winkel α zwischen der äußeren Ringabschnittsfläche (2) und der ebenen Unterlage (5).

## Claims

1. Corrosion resistant screw securing disc having an annular stainless steel disc body for arrangement between a screw head and a flat support (5), with a disc upper side (6) and a disc underside (1) facing the support, wherein the disc body is of convex design, **characterised in that** the surfaces of the disc upper side (6) and the disc underside (1) of the disc body are compacted by a stamping process, wherein the disc body has a material thickness of at least 1.5 mm, wherein both surfaces of upper and underside (6, 1) of the disc body are provided with a mutually different cordage (7) with respect to cordage depth and/or cordage pattern.

2. Screw securing disc according to claim 1, **characterised in that** the disc body has a material thickness of at least 2.0 mm, preferably at least 2.5 mm.

3. Screw securing disc according to one of the previous claims, **characterised in that** the stainless steel disc body is made of stainless steel of the material number 1.4401 or 1.4301 according to DIN EN 10027-2:2015-7.

4. Screw securing disc according to one of the previous claims, **characterised in that** on its underside (6) facing the support (5), an outer and an inner ring section surface (2, 3) are arranged at an angle to one another, wherein the outer edge of the outer ring section surface (2) rests on the support (5) in the untensioned state of the disc and wherein both ring section surfaces (2, 3) each enclose an acute angle with the support (5), wherein the angle α formed between the outer ring section surface (2) and the support (5) is preferably greater than the angle β formed between the inner ring section surface (3) and the support (5).

5. Screw securing disc according to one of the previous claims, **characterised in that** at least one of the two surfaces of upper and underside (6, 1) of the disc body is polished.

6. Screw securing disc according to claim 4 or 5, **characterised in that** the acute angle α between the outer ring section surface (2) and the support (5) in the untensioned state is between 10° and 20°, preferably between 12° and 15°, wherein the acute angle β between the inner ring section surface (3) and the support (5) in the untensioned state is between 3° and 15°, preferably between 5° and 10°.

7. Screw securing disc according to one of claims 4 to 6, **characterised in that** the angle γ between the two ring section surfaces (2, 3) facing the flat support (5) is an obtuse angle.

8. Screw securing disc according to one of claims 4 to 7, **characterised in that** the acute angle β between the inner ring section surface (3) and the flat support (5) in the untensioned state is approximately half as great as the acute angle α between the outer ring section surface (2) and the flat support (5).

## Revendications

1. Rondelle de blocage vis, résistante à la corrosion, avec un corps de rondelle en acier inoxydable annulaire à disposer entre une tête de vis et une garniture (5) plane, avec un côté supérieur de la rondelle (6) et un côté inférieur de la rondelle (1) regardant la garniture, sachant que le corps de rondelle est de forme convexe, **caractérisée en ce que** les surfaces du côté supérieur de la rondelle (6) et du côté inférieur de la rondelle (1) du corps de rondelle sont comprimées par un processus d'estampage, sachant que le corps de rondelle présente une épaisseur de matériau d'au moins 1,5 mm, sachant que les deux surfaces des côtés supérieur et inférieur (6, 1) du corps de rondelle sont dotées d'un crénelage différent (7) concernant la profondeur et/ou le type du crénelage.

2. Rondelle de blocage vis selon la revendication 1, **caractérisée en ce que** le corps de rondelle présente une épaisseur de matériau d'au moins 2,0 mm, de préférence d'au moins 2,5 mm.

3. Rondelle de blocage vis selon l'une des revendications précédentes, **caractérisée en ce que** le corps de rondelle en acier inoxydable est fabriqué en acier inoxydable avec le numéro de matériau 1.4401 ou 1.4301 conformément à la norme DIN EN 10027-2:2015-7.

4. Rondelle de blocage vis selon l'une des revendications précédentes, **caractérisée en ce que** sur la face inférieure (6) regardant la garniture (5), une surface de segment annulaire extérieure et une surface de segment annulaire intérieure (2, 3) sont disposées, formant réciproquement un angle, sachant qu'à l'état non serré de la rondelle, le bord extérieur de la surface de segment annulaire extérieure (2) repose sur la garniture (5) et sachant que les deux surfaces de segment annulaire (2, 3) forment respectivement un angle aigu avec la garniture (5), sachant que l'angle α formé entre la surface de segment annulaire extérieure (2) et la garniture (5) est de préférence supérieur à l'angle β formé entre la surface de segment annulaire intérieure (3) et la garniture (5).

5. Rondelle de blocage vis selon l'une des revendications précédentes, **caractérisée en ce qu'**au moins une des deux surfaces des côtés supérieur et inférieur (6, 1) du corps de rondelle est polie.

6. Rondelle de blocage vis selon la revendication 4 ou 5, **caractérisée en ce qu'**à l'état non serré, l'angle aigu α entre la surface de segment annulaire extérieure (2) et la garniture (5) est de 10° à 20°, de préférence de 12° à 15°, sachant qu'à l'état non serré, l'angle aigu β entre la surface de segment annulaire intérieure (3) et la garniture (5) est de 3° à 15°, de préférence de 5° à 10°.

7. Rondelle de blocage vis selon l'une des revendications 4 à 6, **caractérisée en ce que** l'angle γ regardant la garniture (5) plane entre les deux surfaces de segment annulaire (2, 3) est un angle obtus.

8. Rondelle de blocage vis selon l'une des revendications 4 à 7, **caractérisée en ce qu'**à l'état non serré, l'angle aigu β entre la surface de segment annulaire intérieure (3) et la garniture (5) plane est environ moitié moins grand que l'angle aigu α entre la surface de segment annulaire extérieure (2) et la garniture (5) plane.
